# EUROPÄISCHE PATENTANMELDUNG

(11) **EP 4 372 238 A2**
(43) Veröffentlichungstag der Anmeldung: **22.05.2024**
(21) Anmeldenummer: 24166508.2
(22) Anmeldetag: 28.02.2018
(51) Int. Cl.: F16B 19/14

(54) **NAGEL FÜR DEN EINSATZ IN EINEM NAGELSETZGERÄT**

(30) Priorität: 23.03.2017 DE 102017106335; 29.03.2017 DE 102017106705
(62) Teilanmeldung aus: 22156052.7
(71) Anmelder: Raimund Beck Nageltechnik GmbH, 5270 Mauerkirchen (AT)
(72) Erfinder: Korte, Dr. Hans, 23966 Wismar (DE); Siemers, Stefan, 84489 Burghausen (DE)
(74) Vertreter: Paul & Albrecht Patentanwälte PartG mbB

(57) **Zusammenfassung**

Die vorliegende Erfindung betrifft einen Nagel für den Einsatz in einem Nagelsetzgerät, der aus einem überwiegend lignocellulosischem Material besteht und einen Nagelschaft (1a) aufweist, an dessen vorderem Ende eine als kegelförmige Rundspitze ausgebildete Nagelspitze (16) vorgesehen ist, und an dessen hinterem Endbereich ein Kopfbereich (1c) ausgebildet ist, wobei der Spitzenwinkel der Nagelspitze > 40° ist. Desweiteren betrifft die Erfindung einen Nagelstreifen umfassend eine Mehrzahl von Nägeln, die in entsprechende Öffnungen eines Lochstreifenbands eingeschoben sind.

## Beschreibung

Die vorliegende Erfindung betrifft einen Nagel für den Einsatz in einem Nagelsetzgerät, der aus einem überwiegend lignocellulosischem Material besteht und einen Nagelschaft aufweist, an dessen vorderem Ende eine als kegelförmige Rundspitze ausgebildete Nagelspitze vorgesehen ist, und an dessen hinterem Endbereich ein Kopfbereich ausgebildet ist. Desweiteren betrifft die Erfindung einen Nagelstreifen umfassend eine Mehrzahl solcher Nägel, die in entsprechende Öffnungen eines Lochstreifenbands eingeschoben sind.

Nägel sind seit langer Zeit als Verbindungsmittel bekannt. Sie werden überwiegend aus Metall, z.B. aus Stahl, Aluminium, Kupfer etc. hergestellt. Metallnägel sind jedoch mit Nachteilen behaftet. So neigen Stahlnägel trotz Korrosionsschutzmaßnahmen wie z.B. Verzinken unter ungünstigen Bedingungen zum Rosten, und zwar insbesondere dann, wenn in dem genagelten Werkstoff saure Bedingungen herrschen. Dies gilt insbesondere für gerbstoffreiche Hölzer, die wegen ihrer Dauerhaftigkeit im Außenbereich, z.B. bei Fassaden und Terrassen eingesetzt werden. Bei Bewitterung können entstehen unerwünschte dunkle bis schwarze Verfärbungen an den Nagelstellen entstehen. Eine Abhilfe durch Verwendung rostfreier Stahlsorten ist möglich aber sehr kostenaufwendig. Ein weiterer Nachteil besteht darin, dass sich das Recycling von mit Stahlnägeln durchsetzten Holzprodukten aufwendig gestaltet.

Aus diesem Grund werden alternativ Nägel aus Holz oder verholztem Pflanzenmaterial wie z.B. Bambus eingesetzt. Lange Zeit konnten solche Holznägel nur dann eingesetzt werden, wenn der zu nagelnde Untergrund zuvor mit einem Loch versehen wurde, in welches der Nagel getrieben wurde. Neuere Entwicklungen ermöglichen es jedoch, Nägel aus Holz oder holzartigen, überwiegend lignocellulosischen Materialien mit Hilfe von Nagelsetzgeräten wie z.B. Druckluftnaglern direkt in Holz einzuschießen, ohne das Holzmaterial vorzubohren. Zu verweisen ist insbesondere auf die WO 2016/1809001 A der Anmelderin, aus der ein Nagelstreifen zum Einsatz in einem Nagelsetzgerät bekannt ist, dessen Nägel aus Holz oder Holzwerkstoffen bestehen und durch Verbindungsmittel miteinander verbunden sind, welche beim Setzen der Nägel automatisch abgeschert werden. Die Nagelspitze oder Nägel ist hier kegelförmig ausgebildet, wobei das Verhältnis der Länge der Nagelspitze zur kleinsten Dicke des Nagelschafts zwischen 1,5 und 3 liegt.

Es hat sich gezeigt, dass diese Nagelspitzenausbildung beim Setzen der Nägel zum Spalten der zu verbindenden Bauteile führen kann, wenn diese aus anisotropen Baustoffen wie beispielsweise Holz bestehen. Ebenso wird als nachteilig angesehen, dass sich die Herstellung der Nagelstreifen durch Pressen und/oder Fräsen aufwendig gestaltet.

Aufgabe der vorliegenden Erfindung ist es daher, einen Nagel der eingangs genannten Art bereitzustellen, der sich auch in Holzwerkstoffe ohne die Gefahr eines Spaltens derselben eintreiben lässt.

Diese Aufgabe ist bei einem Nagel der eingangs genannten Art dadurch gelöst, dass der Spitzenwinkel der Nagelspitze > 40° ist. In bevorzugter Weise liegt der Spitzenwinkel der Nagelspitze im Bereich von 45° und 60°, wobei er in zweckmäßiger Weise genau 45° oder 60° beträgt. Größere Winkel wie beispielsweise 90° sind jedoch auch möglich.

Es hat sich gezeigt, dass Nägel, bei denen die Spitzenwinkel in den angegebenen Bereichen liegen und insbesondere größer als 50° sind, eine deutlich geringere Spaltwirkung auf genagelte Bauteile ausüben als Nägel, deren Spitzenwinkel kleiner sind, beispielsweise bei 20° liegen.

Obwohl Nägel aus verholztem Pflanzenmaterial gegenüber solchen aus Stahl der gleichen Abmessungen eine erhöhte Auszugsfestigkeit besitzen und deshalb in den meisten Fällen keines Kopfes bedürfen, gibt es Anwendungsfälle, in denen nicht nur die Auszugsfestigkeit, sondern auch die Durchzugsfestigkeit von Bedeutung ist. Um die Durchzugsfestigkeit zu erhöhen, aber die Produktionsvorteile von stiftartigen Nägeln gegenüber solchen mit Kopf aufrecht zu erhalten, ist gemäß einer Ausführungsform der Erfindung vorgesehen, dass der Kopfbereich gegenüber dem Nagelschaft verdickt ist und sich insbesondere zum freien Ende des Nagels hin kontinuierlich verbreitert.

Ebenso kann in der oberen Stirnfläche des Kopfbereichs wenigstens eine sich in der Axialrichtung des Nagelschaftes erstreckende Ausnehmung vorgesehen sein, die derart ausgebildet ist, dass in sie ein Keil axial eintreibbar ist, um die benachbart zu der Ausnehmung vorhandenen Materialstege des Kopfbereiches nach außen zu drücken. Zweckmäßigerweise ist die wenigstens eine Ausnehmung schlitzförmig ausgebildet und durchsetzt den Kopfbereich von dessen einen Randbereich zu dessen gegenüberliegenden Randbereich. Insbesondere ist nur eine einzige schlitzförmige Ausnehmung vorgesehen, die den Kopfbereich zentral durchsetzt und die Nagelschaftlängsachse schneidet.

Bei dieser Ausführungsform wird nach dem Einschlagen bzw. Eintreiben eines Nagels in einen Untergrund ein Keil axial in die Ausnehmung eingetrieben, so dass die benachbart zu der Ausnehmung vorhandenen Materialstege auseinander gedrückt werden. Hierdurch wird der Kopfbereich insgesamt nach außen verformt, so dass es zu einer erhöhten Anpressung gegen das Untergrundmaterial kommt. Wenn dieses weich genug ist, wird das Untergrundmaterial sogar ebenfalls zusammengedrückt. In diesem Fall erhalten der Kopfbereich und der hierzu korrespondierende Abschnitt durch den eingeschlagenen Nagel in dem Untergrundmaterial gebildeten Nagelkanalsabschnitt eine leichte Konusform ähnlich der einer Schraube mit einem Senckopf. Durch die höheren Anpresskräfte im Kopfbereich sowie die Konusform wird die Durchzugsfestigkeit der Nägel deutlich erhöht.

Die Tiefe der Ausnehmungen/Schlitze kann dabei variabel gewählt werden, sollte jedoch so bemessen sein, dass die benachbarten Materialstege des Kopfbereichs hinreichend auseinandergedrückt werden können. Hierzu ist gemäß einer Ausführungsform der Erfindung vorgesehen, dass sich die Ausnehmung ausgehend von der oberen Stirnfläche des Kopfbereiches des Nagels über eine axiale Länge von wenigstens 3 mm, insbesondere wenigstens 4 mm und bevorzugt wenigstens 5 mm in den Kopfbereich erstreckt.

Bei einer Weiterbildung der Erfindung ist vorgesehen, dass in der äußeren Umfangsfläche des Nagelschafts mehrere parallel zu einander in der Längsrichtung des Nagelschafts, bevorzugt parallel zu der Nagelschaftlängsachse verlaufende Längsrillen ausgebildet sind. Dabei können sich die Längsrillen über die gesamte Länge des Nagelschaftes erstrecken und gleichmäßig entlang des Umfangs des Nagelschafts verteilt angeordnet sein. Die Form der Längsrillen kann frei gewählt werden. Gemäß einer Ausführungsform der Erfindung ist jedoch vorgesehen, dass sie in Form von Einkerbungen mit etwa dreieckigem Querschnitt ausgebildet sind.

Dadurch, dass der Zylinderschaft nicht glatt, sondern geriffelt mit etwa sternförmigem Querschnitt ausgeführt ist, wird die Auszugsfestigkeit der Nägel weiter erhöht.

Der Nagel kann bestehen aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignosecellulosische Fasern aus Einjahrespflanzen enthält, besteht.

Es hat sich gezeigt, dass gute Ergebnisse erzielt werden, wenn der organisch gebundene Holzwerkstoff Phenolharz als Kunstharz enthält. Insbesondere sollte der organisch gebundene Holzwerkstoff Kunstharz in einer Menge von wenigstens 30 Gew-%, insbesondere wenigstes 35 Gew-% enthalten, wobei der Kunstharzanteil bevorzugt 40 Gew-% beträgt.

In bevorzugter Weise bestehen die erfindungsgemäßen Nägel aus einem Material mit einer Dichte > 0,65 g/cm³, insbesondere einer Dichte > 0,85 g/cm³ und bevorzugt einer Dichte > 1,0 g/cm³, wobei die Dichte insbesondere 1,3 g/cm³ beträgt.

Damit können harte Hölzer als Material für die erfindungsgemäßen Nägel dienen. Zu den harten Hölzern gehören Laubhölzer mit Dichten ab 0,65 g/cm³, wie z.B. Rotbuche (Fagus sylvatica), Hainbuche (Carpinus betulus), Ahorn (Acer pseudoplatanus oder A. platanoides), bevorzugt Laubhölzer mit Dichten größer 0,85 g/cm³, wie z.B. Pernambuc (Caesalpinia echinata), Bangkirai (Shorea ssp.) oder einige Palisanderarten (Dalbergia ssp, Machaerium ssp), besonders bevorzugt Laubhölzer mit Dichten größer 1,0 g/cm³, wie z.B. Bongossi (Lophira alata) oder Pockholz (Guaiacum ssp.).

Zu geeigneten Holzwerkstoffen, die ohne Zusatz von Bindemitteln hergestellt werden, gehören verdichtete Hölzer mit Dichten größer 0,65 g/cm³, insbesondere mit Dichten größer 0,85 g/cm³ und bevorzugt mit Dichten größer 1,0 g/cm³. Diese können beispielsweise nach der WO94/20273 A hergestellt werden.

Zu geeigneten Holzwerkstoffen, die unter Zusatz von Bindemitteln hergestellt werden, gehören nicht verdichtete Furnierschichthölzer und Sperrhölzer aus Holzarten ausreichender Dichte (s.o). Zu den kommerziell erhältlichen Furnierschichthölzern ausreichender Dichte gehört z.B. BauBuche von Pollmeier Massivholz GmbH & Co.KG, Creuzburg, mit einer Dichte von 0,68 g/cm³. Sperrhölzer mit gleich starken Furnierlagen, sogenannte Multiplexplatten, werden aus Buche oder Birke mit Dichten von ≥ 0,7 g/cm³ von verschiedenen Herstellern, wie z.B. UPM Plywood, Lahti, Finnland, angeboten. Zu den bevorzugten Holzwerkstoffen mit Bindemittelanteilen gehören verdichtete Furnierschichthölzer, Presslagenholz und Sperrhölzer, z.B. aus Buchenfurnier mittlerer bis hoher Verdichtung mit Dichten von 1,1 g/cm³ bis 1,4 g/cm³, wie z.B. Kunstharzpressholz nach DIN 7707.

Den Holzwerkstoffen strukturell sehr ähnlich sind verdichtete und verleimte Werkstoffe aus verholztem Pflanzenmaterial, z.B. aus Monokotylidonen, zu denen u.a. Gewebe aus Palmen- und Bambusgewächsen gehören. Verdichtete Bambusprodukte werden unter anderem unter der Bezeichnung CoBAM (compressed Bamboo) geführt. CoBAM weist Dichten von 0,95 bis 1,25 g/cm³ auf.

Der Nagelschaft kann prinzipiell einen beliebigen Querschnitt besitzen. Beispielsweise kann er oval oder mehreckig ausgebildet sein. In bevorzugter Weise besitzt der Nagelschaft jedoch einen kreisrunden Durchmesser. Bevorzugt liegt der Durchmesser des Nagelschafts bzw. die kleinste Nageldicke bei einem ovalen oder mehreckigen zwischen 2 mm und 8 mm, insbesondere zwischen 3,5 und 6 mm und bevorzugt zwischen 4 und 5 mm.

Gemäß einer Weiterbildung der Erfindung ist vorgesehen, dass die Nägel einen Nagelkopf in der Form einer halblinsenförmigen Kalotte aufweisen, der bezüglich der Schaftachse radial über den Schaft nach außen vorsteht. In bevorzugter Weise ist der Nagelschaft jedoch an seinem der Nagelspitze gegenüberliegenden Ende glatt unter einem Winkel von 90° zur Schaftachse abgeschnitten ausgeführt.

Die Nagellänge (Kopf + Schaft + Spitze) variiert in der Regel zwischen 20 mm und 90 mm, insbesondere zwischen 30 mm und 70 mm, bevorzugt zwischen 40 mm und 60 mm.

Die erfindungsgemäßen Nägel werden bevorzugt einzeln hergestellt und anschließend magazinisiert. Sie können dabei entweder einzeln oder in loser Schüttung über einen Vorratsbehälter, der die Nägel - geordnet nach einseitiger Ausrichtung der Nagelspitzen - einem Nagelsetzgerät zuführt, in ein Nagelsetzgerät geladen werden. Bevorzugt erfolgt eine Magazinisierung der Nägel zu Coils mit Lochstreifenband, in welches die Nägel eingeschoben werden. Beim Setzen werden die Nägel aus den Lochstreifenbändern herausgeschoben, ohne dass das Verbindungsmittel, hier das Lochstreifenband, dabei abgeschert wird. Das Lochstreifenband bleibt unversehrt in seiner Struktur erhalten und wird nicht wie bei abgescherten Verbindungsmitteln entweder mit in die Bauteile geschossen oder in Form von Bruchstücken um den Arbeitsbereich verteilt. Der unbeschädigte Lochstreifen kann entweder als Ganzes entsorgt oder zur Wiederverwendung erneut eingesetzt werden.

Die erfindungsgemäßen Nägel können verwendet werden, um von Hand eingenagelt zu werden. Alternativ können sie auch mittels eines Nagelsetzgerätes beispielsweise einem Druckluftnagler in einen Untergrund eingeschossen werden.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: den vorderen Endbereich von Nägeln mit unterschiedlich ausgebildeten Nagelspitzen in Vorderansicht,
- Figur 2a: eine Ausführungsform eines erfindungsgemäßen Nagels mit einer am Kopfbereich versehenen schlitzförmigen Ausnehmung,
- Figur 2b: den Nagel aus Figur 2a mit einem in die schlitzförmige Ausnehmung eingetrieben Keil,
- Figur 3: einen möglichen Querschnitt des Nagelschaftes eines erfindungsgemäßen Nagels und
- Figur 4: eine Alternative Ausführungsform eines Querschnitts des Nagelschaftes.

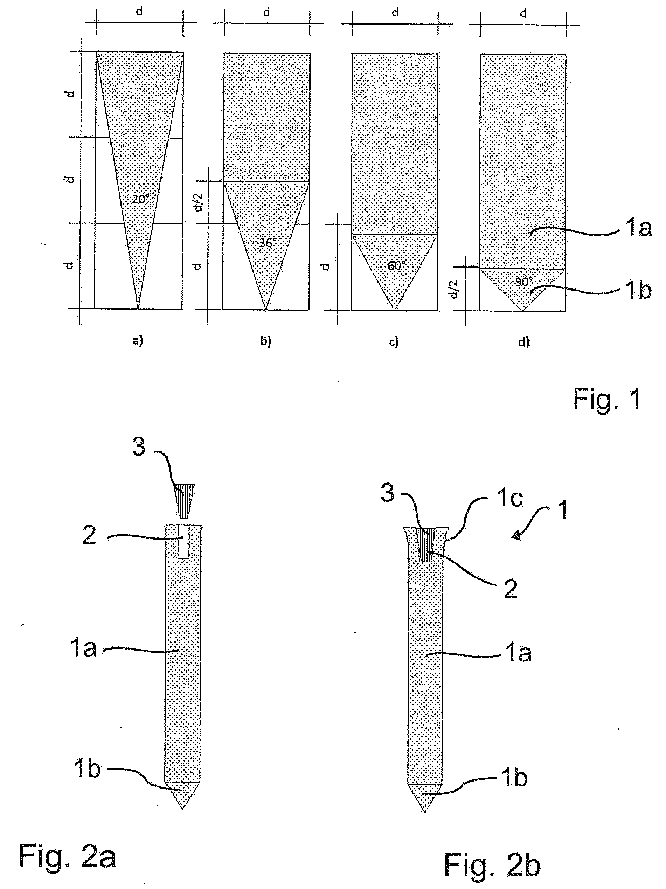

In den Figuren 2a und 2b ist schematisch ein Nagel 1 gemäß der vorliegenden Erfindung dargestellt. Der Nagel besteht überwiegend aus einem lignocellulosischen Material. In dem vorliegenden Fall besteht er aus einem kunstharzgebundenen Schichtholz, das 35 Gew-% Phenolharz als Kunstharz enthält und damit eine Dichte von mehr als 1 g/cm³, konkret knapp 1,3 g/cm³ besitzt.

Der Nagel 1 besitzt einen Nagelschaft 1a, an dessen unterem Ende eine Nagelspitze 1b mit einem kreisrunden Querschnitt, d.h. eine kegelförmige Rundspitze ausgebildet ist. Die Nagelspitze 1b besitzt hier eine axiale Länge, die etwa so groß wie der Durchmesser des Nagelschaftes 1a ist, so dass der Spitzenwinkel der Nagelspitze 1b 60° beträgt.

Wie in Figur 1d gezeigt ist, kann der Spitzenwinkel auch beispielsweise 90° betragen. Wesentlich ist, dass er größer als 40° ist, damit die Spaltwirkung auf genagelte Bauteile geringer ist als bei Nägeln, deren Spitzenwinkel kleiner ist, und beispielsweise bei 20° liegt, wie dies in Figur 1a gezeigt ist.

Der obere Endbereich des Nagelschaftes 1a ist senkrecht zur Nagellängsachse abgeschnitten. Damit besitzt der Nagel 1 einen Kopfbereich 1c, welcher den gleichen Querschnitt wie der Nagelschaft 1a besitzt. Wie in der Zeichnung erkennbar ist, ist der Kopfbereich 1c ferner mit einer schlitzförmigen Ausnehmung 2 versehen, die sich ausgehend von der oberen Stirnfläche des Nagels 1 axial über eine Länge von mehreren Millimetern in den Kopfbereich 1c respektive den Nagelschaft 1a entlang einer Längsmittelebene des Nagels 1 erstreckt und den Kopfbereich 1c bzw. den Nagelschaft 1a von dessen einem Randbereich zum dessen gegenüberliegendem Randbereich durchsetzt. In die Ausnehmung 2 ist nach oder vor dem Einschlagen des Nagels 1 in ein Bauteil oder einen Untergrund ein Keil 3 einschlagbar, so dass die die Ausnehmung 2 begrenzenden Materialstege auseinandergedrückt werden und sich in der Folge der Kopfbereich 1c aufweitet, wie dies in Figur 2b angedeutet ist. Durch die Aufweitung werden die Presskräfte zwischen dem Kopfbereich 1c und dem Bauteil, in welches der Nagel 1 mit dem Kopfbereich 1c eingeschlagen ist/wird, erhöht, und in der Folge wird die Durchzugsfestigkeit des Nagels 1 gesteigert.

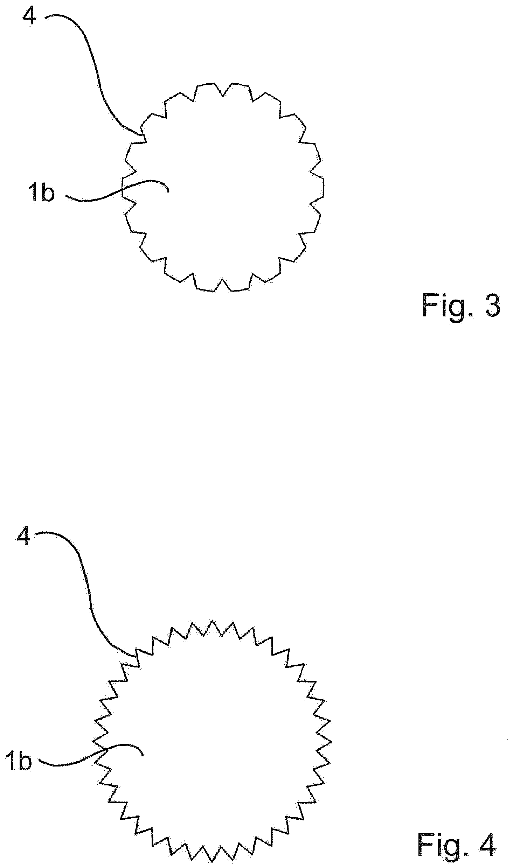

Der Nagelschaft 1a und der Kopfbereich 1c können grundsätzlich eine glatte Oberfläche haben. In bevorzugter Weise ist die Umfangsfläche des Nagels 1 im Bereich des Nagelschaftes 1a sowie des Nagelkopfes 1c jedoch geriffelt ausgebildet. Mit anderen Worten ist der Nagelschaft 1a bzw. Nagelkopf 1c mit Längsrillen 4 versehen, die sich über die gesamte Länge des Nagelschaftes 1a/des Nagelkopfes 1c erstrecken und hier in Form von Einkerbungen mit dreieckigem Querschnitt ausgebildet sind, so dass Wandungsabschnitte mit trapezoidalem (siehe Figur 3) oder dreieckigem (siehe Figur 4) Querschnitt gebildet werden.

## Patentansprüche

1. Nagel für den Einsatz in einem Nagelsetzgerät, der aus einem überwiegend lignocellulosischem Material besteht und einen Nagelschaft (1a) aufweist, an dessen vorderem Ende eine als kegelförmige Rundspitze ausgebildete Nagelspitze (16) vorgesehen ist, und an dessen hinterem Endbereich ein Kopfbereich (1c) ausgebildet ist, **dadurch gekennzeichnet, dass** der Spitzenwinkel der Nagelspitze > 40° ist.

2. Nagel nach Anspruch 1, **dadurch gekennzeichnet, dass** der Spitzenwinkel der Nagelspitze (1b) im Bereich von 45° und 60° liegt und bevorzugt 45° oder 60° beträgt.

3. Nagel nach Anspruch 1 oder 2, **dadurch gekennzeichnet, dass** der Nagelschaft (1a) an seinem der Nagelspitze (1b) gegenüberliegenden Kopfbereich (1c) unter einem Winkel von 90° zur Schaftachse abgeschnitten sind.

4. Nagel nach Anspruch 3, **dadurch gekennzeichnet, dass** der Kopfbereich (1c) gegenüber dem Nagelschaft (1a) verdickt ist und sich insbesondere zum freien Ende des Nagels (1) hin kontinuierlich erweitert.

5. Nagel nach Anspruch 3 oder 4, **dadurch gekennzeichnet, dass** in der oberen Stirnfläche des Kopfbereichs (1c) wenigstens eine sich in der Axialrichtung des Nagelschaftes (1a) erstreckende Ausnehmung (2) vorgesehen ist, die derart ausgebildet ist, dass in sie ein Keil (3) axial eintreibbar ist, um die benachbart zu der Ausnehmung vorhandenen Materialstege des Kopfbereichs (1c) nach außen zu drücken.

6. Nagel nach Anspruch 5, **dadurch gekennzeichnet, dass** die wenigstens eine Ausnehmung (2) schlitzförmig ausgebildet ist und den Kopfbereich (1c) von einem Randbereich zu einem gegenüberliegenden Randbereich desselben durchsetzt, wobei insbesondere eine einzige schlitzförmige Ausnehmung (2) vorgesehen ist, die den Kopfbereich (1c) zentral durchsetzt und die Nagelschaftlängsachse schneidet.

7. Nagel nach Anspruch 5 oder 6, **dadurch gekennzeichnet, dass** sich die Ausnehmung (2) ausgehend von der oberen Stirnfläche des Kopfbereiches (1c) des Nagels über eine axiale Länge von wenigstens 3 mm, insbesondere wenigstens 4 mm und bevorzugt wenigstens 5 mm in den Kopfbereich (1c) erstreckt.

8. Nagel nach einem der vorherigen Ansprüche, **dadurch gekennzeichnet, dass** in der äußeren Umfangsfläche des Nagelschafts (1a) mehrere parallel zu einander in der Längsrichtung des Nagelschafts (1a), bevorzugt parallel zu der Nagelschaftlängsachse verlaufende Längsrillen (4) ausgebildet sind.

9. Nagel nach Anspruch 8, **dadurch gekennzeichnet, dass** sich die Längsrillen (4) über die gesamte Länge des Nagelschafts (1a) erstrecken und/oder in Form von Einkerbungen mit etwa dreieckigem Querschnitt ausgebildet sind.

10. Nagel nach Anspruch 8 oder 9, **dadurch gekennzeichnet, dass** die Längsrillen (4) gleichmäßig entlang des Umfangs des Nagelschafts (1a) verteilt angeordnet sind.

11. Nagel nach einem der vorhergehenden Ansprüche, **dadurch gekennzeichnet, dass** der Nagel aus Holz und/oder einem Holzwerkstoff, insbesondere einem organisch gebundenen Holzwerkstoff, bevorzugt einem kunstharzgebundenen Schichtholz oder einem kunstharzgebundenen Faserverbundwerkstoff, der lignosecellulosische Fasern aus Einjahrespflanzen enthält, hergestellt ist.

12. Nagel nach Anspruch 11, **dadurch gekennzeichnet, dass** der organisch gebundene Holzwerkstoff Phenolharz als Kunstharz enthält.

13. Nagel nach Anspruch 11 oder 12, **dadurch gekennzeichnet, dass** der organisch gebundene Holzwerkstoff Kunstharz in einer Menge von wenigstens 30 Gew.-%, insbesondere wenigstens 35 Gew.-% enthält, wobei der Kunstharzanteil bevorzugt 40 Gew.-% beträgt.

14. Nagel nach einem der vorhergehenden Ansprüche, **dadurch gekennzeichnet, dass** er aus einem Material mit einer Dichte > 0,65 g/cm³, insbesondere einer Dichte > 0,85 g/cm³ und bevorzugt einer Dichte > 1,0 g/cm³ besteht, wobei die Dichte insbesondere 1,3 g/cm³ beträgt und/oder dass der Nagelschaft (1a) einen runden, ovalen oder mehreckigen Querschnitt besitzt, wobei insbesondere der Durchmesser beziehungsweise die kleinste Schaftdicke 2 mm bis 6 mm, insbesondere 3 mm bis 6 mm und bevorzugt 4 mm bis 5 mm beträgt.

15. Nagelstreifen umfassend eine Mehrzahl von Nägeln nach einem der vorhergehenden Ansprüche, die in entsprechende Öffnungen eines Lochstreifenbands eingeschoben sind.
